# FASCICULE DE BREVET EUROPEEN

(11) **EP 3 901 058 B1**
(45) Date de publication et mention de la délivrance du brevet: **07.06.2023**
(21) Numéro de dépôt: 21167968.3
(22) Date de dépôt: 13.04.2021
(51) Int. Cl.: B65D 81/38

(54) **CONTENEUR POUR STOCKAGE ET/OU ENVOI THERMOSTABLE DE PRODUITS**
BEHÄLTER FÜR DIE THERMOSTABILE LAGERUNG UND/ODER VERSENDUNG VON PRODUKTEN
CONTAINER FOR STORING AND/OR HEAT-STABLE SENDING OF PRODUCTS

(30) Priorité: 14.04.2020 BE 202005241
(43) Date de publication de la demande: 27.10.2021
(73) Titulaire: Exam Packaging, 5590 Ciney (BE)
(72) Inventeur: LE JEUNE D'ALLEGEERSHECQUE, Alexandre, 1000 Bruxelles (BE); DE BOCK, Ingrid, 1785 Merchtem (BE); PIRLOT, Céline, 5590 Ciney (BE)
(74) Mandataire: Gevers Patents

(56) Documents cités:
- WO-A1-03/083386
- DE-U1-202014 004 515
- US-A1- 2011 147 391
- US-A1- 2014 353 317
- US-A1- 2020 102 134

## Description

### Domaine technique

La présente invention concerne un conteneur pour stockage et/ou envoi thermostable de produits.

### Art antérieur

Il est connu de maintenir le contenu d'un containeur à température stable de façon active, par exemple par un frigidaire.

Il existe aussi des conteneurs permettant de maintenir leur contenu à température constante de façon passive, c'est-à-dire sans compresseur ou sans énergie électrique.

Pour des volumes plus importants, typiquement un volume transporté par une palette, le document WO2019/177682A1 décrit un dispositif d'expédition de palette à température régulée.

Les documents WO03/083386 A1, US2020/102134 A1, DE202014004515 U1, et US2011/147391 A1 divulguent des conteneurs comprenant chacun un assemblage de panneaux. De tels assemblages laissent typiquement un certain jeu entre les panneaux, qui peuvent créer des ponts thermiques.

Le document US2014/353317 A1 décrit un assemblage de panneaux avec une coque formée d'une mousse expansée de polystyrène expansé ou polypropylène expansé.

### Résumé de l'invention

Un objet de la présente invention est de fournir un conteneur permettant de maintenir son contenu dans un certain intervalle de température de façon passive pendant plusieurs jours.

L'invention propose un conteneur pour stockage et/ou envoi thermostable de produits, destiné à contenir un volume intérieur de maximum 5000 litres, et comprenant un module comprenant :
- une première paroi,
- une deuxième paroi opposée à la première paroi
- une troisième paroi joignant la première et la deuxième parois,
- une quatrième paroi joignant la première et la deuxième parois,
- une cinquième paroi joignant la première et la deuxième parois, et la troisième et la quatrième parois, et
- une ouverture ;
le conteneur comprenant en outre un couvercle destiné à fermer l'ouverture ;
dans lequel
le module comprend un premier matériau et une pluralité de panneaux comprenant au moins un premier, un deuxième, un troisième, un quatrième, et un cinquième panneaux;
les premier, deuxième, troisième, quatrième, et cinquième panneaux sont recouverts au moins partiellement du premier matériau;
la première paroi comprend au moins une partie du premier panneau, la deuxième paroi comprend au moins une partie du deuxième panneau, la troisième paroi comprend au moins une partie du troisième panneau, la quatrième paroi comprend au moins une partie du quatrième panneau, et la cinquième paroi comprend au moins une partie du cinquième panneau ;
les premier, deuxième, troisième, quatrième, et cinquième panneaux sont fixés entre eux par le premier matériau de sorte que le premier matériau et les premier, deuxième, troisième, quatrième, et cinquième panneaux font partie d'un même élément monobloc ; et
le premier matériau est du polyuréthane et a une conductivité thermique inférieure à 0,05 W m⁻¹ K⁻¹, et les premier, deuxième, troisième, quatrième, et cinquième panneaux ont une conductivité thermique inférieure à 0,005 W m⁻¹ K⁻¹.

Le module de l'invention comprend au moins deux matériaux de faible conductivité thermique. Les panneaux, au vu de leur très faible conductivité thermique, fournissent un excellent blocage thermique perpendiculairement aux parois. Les panneaux et le premier matériau forment ensemble un monobloc, permettant notamment d'éviter les ponts thermiques entre l'extérieur et l'intérieur du conteneur.

Les cinq panneaux des cinq parois du module étant d'un seul tenant avec le premier matériau, l'ensemble forme un monobloc qui n'induit pas de pont thermique, contrairement aux modules assemblés qui présentent naturellement des ponts thermiques. Ces avantages entrainent un gain économique indirect, vu notamment la diminution des excursions de température.

Le module est très facile à utiliser car il ne doit pas être assemblé, les opérateurs sont donc formés très rapidement à son utilisation. De plus, le risque de commettre des erreurs, notamment de montage, est faible. De plus, une seule personne suffit pour y positionner des étagères et des éléments de contrôle de température.

Il est intéressant de noter que le document US2014/353317 A1 déconseille l'usage du polyuréthane. Malgré un tel préjugé, les inventeurs ont choisi d'utiliser ce matériau notamment car il a d'excellentes propriétés anti-pénétration, ce qui empêche d'ouvrir le conteneur autrement qu'en ouvrant le couvercle. Le polyuréthane permet aussi d'éviter que des chocs ne percent les surfaces, résultant en des ponts thermiques.

La résistance à l'écrasement du module selon l'invention permet d'empiler plusieurs conteneurs selon l'invention l'un sur l'autre. Cette résistance, combinée à la résistance à la perforation du module, entraîne une protection du contenu particulièrement grande. Par exemple, un prototype du conteneur selon l'invention a résisté à une masse de plusieurs tonnes.

Les caractéristiques du conteneur selon l'invention contribuent à ce qu'il permette de conserver un volume intérieur important à température particulièrement stable pendant une durée particulièrement longue, d'au moins une semaine. Ainsi, le conteneur selon l'invention permet par exemple un transport maritime ou par train de certains produits à la place d'un transport aérien, ce qui est un avantage économique et écologique. En outre, pour un même moyen de transport, par route par exemple, de plus grandes distances peuvent être parcourues.

L'invention est particulièrement adaptée, mais n'est pas limitée à, un maintien à une température plus basse que la température extérieure. Elle peut aussi par exemple être utilisée pour maintenir des produits à 5°C avec une température extérieure de 20°C ou de -20°C.

L'élément monobloc comprenant les cinq parois et le premier matériau est une partie du module, ou est le module lui-même. Le premier matériau est lui-même monobloc.

Le volume intérieur du conteneur est le volume situé à l'intérieur de l'espace défini par le module et le couvercle, lorsque celui-ci ferme l'ouverture. Le conteneur est préférentiellement destiné à avoir un volume intérieur entre 1 et 5000 litres, plus préférentiellement entre 200 et 2000 litres.

Les parois sont préférentiellement planes. La deuxième paroi est de préférence parallèle à la première paroi. La troisième, la quatrième et la cinquième parois sont préférentiellement perpendiculaires aux première et deuxième parois. La troisième et la quatrième parois sont préférentiellement parallèles. Le couvercle est préférentiellement plan.

La première paroi est préférentiellement agencée de façon à reposer sur une palette. La première et la deuxième parois sont préférentiellement horizontales. La troisième, la quatrième et la cinquième parois sont préférentiellement verticales. Le couvercle est préférentiellement vertical.

Les panneaux ont une première et une deuxième surfaces planes séparées par une épaisseur. De préférence, le premier matériau recouvre totalement la première et/ou la deuxième surface de chacune des premier, deuxième, troisième, quatrième, et cinquième panneaux.

Le premier matériau et les panneaux tiennent ensemble par adhésion chimique. Le premier matériau a une conductivité thermique préférentiellement inférieure à 0,03 W m⁻¹ K⁻¹, plus préférentiellement entre 0,015 et 0,025 W m⁻¹ K⁻¹. Les panneaux ont une conductivité thermique préférentiellement inférieure à 0,005W m⁻¹ K⁻¹, plus préférentiellement entre 0,0010 et 0,0050 W m⁻¹ K⁻¹.

Dans un mode de réalisation de l'invention, la première paroi est rectangulaire et a une largeur d'au moins 500 mm et une profondeur d'au moins 500 mm. Comme la première paroi est préférentiellement destinée à reposer sur une palette, il est intéressant qu'elle ait au moins 500 mm de largeur et de profondeur. N'importe quelle taille de la première paroi et de la palette sont possibles tout en restant dans le cadre de l'invention.

La première paroi a préférentiellement une largeur supérieure à sa profondeur. La deuxième paroi a préférentiellement la même largeur et la même profondeur que la première paroi. Par exemple, le conteneur peut faire 1200 mm de large, 1000 mm de profondeur et 1500 mm de haut, ou 1200 mm de large, 800 mm de profondeur et 1200 mm de haut.

Dans un mode de réalisation de l'invention, le premier matériau a une masse volumique entre 30 et 100 kg/m³. Le premier matériau a de préférence une masse volumique entre 35 et 60 kg/m³.

Dans un mode de réalisation optionnel de l'invention, les premier, deuxième, troisième, quatrième, et cinquième panneaux sont plans. Cela peut être des parallélépipèdes rectangles, par exemple des parallélépipèdes rectangles ayant des arêtes planes ou coupées en biais, en forme de « L », ou de « U ».

Dans un mode de réalisation de l'invention, chacun des premier à quatrième panneaux a une première extrémité et une deuxième extrémité, chacune des premières extrémités étant en contact avec la deuxième extrémité d'un autre des premier à quatrième panneaux de façon qu'un chevauchement existe entre la première extrémité de chacun des premier à quatrième panneaux et la deuxième extrémité d'un autres des premier à quatrième panneaux. Ce chevauchement permet d'éviter les ponts thermiques. Par exemple, la première paroi comprend une première extrémité du troisième panneau, la quatrième paroi comprend une première extrémité du premier panneau, la deuxième paroi comprend une première extrémité du quatrième panneau, et la troisième paroi comprend une première extrémité du deuxième panneau. Ainsi, sur la circonférence du module formée par les première à quatrième parois, l'extrémité d'un panneau forme le coin avec la paroi adjacente. Cela évite les ponts thermiques dans les coins du module.

Dans un mode de réalisation de l'invention, les première, deuxième, troisième, quatrième et cinquième parois, et préférentiellement le couvercle, ont une surface intérieure recouverte, au moins partiellement et préférentiellement totalement, d'un deuxième matériau, préférentiellement hydrophobe.

Dans un mode de réalisation de l'invention, les première, deuxième, troisième, quatrième et cinquième parois, et préférentiellement le couvercle, ont une surface extérieure recouverte, au moins partiellement et préférentiellement totalement, d'un troisième matériau, préférentiellement hydrophobe. Le troisième matériau permet notamment d'améliorer la résistance à la pénétration du conteneur, et sa robustesse lors d'une chute.

Dans un mode de réalisation de l'invention, les première, deuxième, troisième, quatrième et cinquième parois, et préférentiellement le couvercle ont une surface extérieure et/ou intérieure protégée au moins partiellement et préférentiellement totalement par un renfort fait d'un quatrième matériau, préférentiellement hydrophobe.

Le recouvrement et/ou le renfort intérieur et/ou extérieur permettent notamment d'éviter d'endommager le premier matériau et/ou les panneaux. Un matériau hydrophobe est particulièrement pratique s'il faut nettoyer le conteneur entre deux utilisations.

Dans un mode de réalisation de l'invention, le conteneur est réutilisable.

Dans un mode de réalisation de l'invention, le conteneur est particulièrement résistant aux chocs localisés sur un point précis ou non. Cela permet le transport de produits dangereux en toute sécurité.

Dans un mode de réalisation de l'invention, le conteneur comprend un cinquième matériau, au moins aussi compressible, de préférence plus compressible, que le matériau formant la surface intérieure du couvercle, à l'interface entre le module et le couvercle. Par exemple, le cinquième matériau est au moins aussi compressible, de préférence plus compressible, que le deuxième et/ou le quatrième matériau. Le cinquième matériau est situé sur les parties du module en contact avec le couvercle et/ou sur les parties du couvercle en contact avec le module. Sa compressibilité lui permet d'éviter que des jeux ne se créent entre le module et le couvercle, évitant ainsi les ponts thermiques.

L'invention propose en outre un système de maintien de température comprenant un conteneur selon un mode quelconque de réalisation de l'invention et des éléments de contrôle de température comprenant un ou plusieurs matériaux à changement de phase. Le matériau à changement de phase peut être choisi pour que sa température de changement de phase soit située dans l'intervalle de température qu'on désire maintenir dans le conteneur, ou pour que sa température de changement de phase soit plus basse que l'intervalle de température qu'on désire maintenir dans le container. Par exemple, la température de changement de phase peut être entre 2°C et 8°C.

Le matériau à changement de phase peut être n'importe quel matériau à changement de phase, y compris tout matériau à changement de phase à base d'eau ou organique. Par exemple, si le matériau à changement de phase est à base d'eau, le matériau à changement de phase peut être de l'eau, un mélange d'eau et un épaississant (par exemple, un épaississant polysaccharidique) pour produire un mélange d'eau gélifiée, ou une solution eau / sel avec un épaississant en option. Si le matériau à changement de phase est un matériau à changement de phase organique, le matériau à changement de phase peut être un matériau à changement de phase organique gélifié, comme cela est décrit dans les documents US 9 598 622 B2 et US 2018/0093816 A1. Plus spécifiquement, une matière organique à changement de phase gélifiée appropriée peut comprendre un ou plusieurs n-alcanes, tels que le n-tétradécane (C14), le n-pentadécane (C15), le n-hexadécane (C16), le n-heptadécane (C17), le n-octadécane (C18), ou leurs combinaisons, conjointement avec, par exemple, un agent gélifiant sous la forme d'un copolymère tribloc styrène-éthylène-butylène-styrène et / ou d'un copolymère tribloc styrène-éthylène-propylène-styrène. Pour le maintien dans un intervalle de température entre 2°C et 8°C, le matériau à changement de phase gélifié peut par exemple comprendre un mélange de n-tétradécane (C14) et KRATON ^{™} G1654 copolymère tribloc styrène-éthylène-butylène-styrène (SEBS).

Dans un mode de réalisation de l'invention, le système de rangement comprend des étagères prévues pour recevoir les éléments de contrôle de température. Les étagères sont préférentiellement agencées pour que les éléments de contrôle de température soient alignés en enfilade ou superposés. Si les éléments de contrôle de température ont une forme de parallélépipède rectangle avec deux premières surfaces plus grandes que les quatre autres surfaces, les étagères sont préférentiellement agencées pour que les premières surfaces des éléments de contrôle de température soient alignées. Les étagères sont dans un matériau permettant de limiter les chocs thermiques.

Dans un mode de réalisation de l'invention, le système de rangement comprend des boites dans lesquelles les éléments de contrôle de température sont alignés ou superposés. Si le système de rangement comprend des étagères, elles sont préférentiellement prévues pour recevoir les boites. Le système de rangement peut être agencé de nombreuses manières tout en restant dans le cadre de l'invention.

Les boites reçoivent préférentiellement chacune une ou plusieurs ligne(s) d'éléments de contrôle de température. Les boites sont préférentiellement faites dans un matériau permettant de limiter les chocs thermiques.

Les étagères comprennent préférentiellement des emplacements tels que les boites sont maintenues en place.

Dans un mode de réalisation de l'invention, entre une et six étagères sont situées préférentiellement perpendiculairement aux surfaces intérieures des première, deuxième, troisième, et/ou quatrième parois et, au moins partiellement, le long des surfaces intérieures des première, deuxième, troisième, et/ou quatrième parois. Elles ont préférentiellement un accès débouchant sur l'ouverture du module. Cela permet de placer facilement les éléments de contrôle de température dans le conteneur une fois celui-ci ouvert. Il suffit d'une seule personne pour faire le placement des éléments de contrôle de température.

De préférence, les étagères sont agencées pour que les premières surfaces d'un élément réfrigérant soient parallèles à la paroi le long de laquelle cet élément réfrigérant est placé.

L'invention concerne aussi un arrangement comprenant un conteneur selon l'invention, et/ou un système de maintien de température selon l'invention. L'arrangement comprend aussi un thermomètre situé dans le conteneur et une mémoire prévue pour enregistrer des données issues de mesures de températures réalisées par le thermomètre. La mémoire peut être par exemple dans le conteneur, fixée à l'extérieur du conteneur et/ou dans un dispositif électronique extérieur au conteneur. Le thermomètre est préférentiellement dans le volume intérieur du conteneur.

L'invention concerne aussi la fabrication et l'utilisation d'un conteneur selon l'invention et/ou d'un système de maintien au froid selon l'invention.

### Brève description des figures

D'autres caractéristiques et avantages de l'invention apparaîtront à la lecture de la description détaillée qui suit pour la compréhension de laquelle on se reportera aux figures annexées parmi lesquelles :
- la figure 1a est une vue de face d'un module dans un mode de réalisation de l'invention,
- la figure 1b est une vue latérale d'un module dans un mode de réalisation de l'invention,
- la figure 2 est une vue de face d'un couvercle dans un mode de réalisation de l'invention,
- la figure 3 est une vue en coupe horizontale d'un conteneur dans un mode de réalisation de l'invention,
- la figure 4a est une vue de face d'un agencement de panneaux dans un mode de réalisation de l'invention,
- la figure 4b est une vue du haut d'un agencement de panneaux dans le même mode de réalisation de l'invention que la figure 4a,
- la figure 5a illustre un agencement possible de deux parties d'un même panneau,
- figure 5b illustre un agencement possible de deux panneaux,
- figure 5c illustre un autre agencement possible de deux panneaux,
- figure 5d illustre un agencement possible des premier à quatrième panneaux,
- la figure 6a est une vue en coupe horizontale correspondant à une arête verticale d'un module selon un premier mode de réalisation de l'invention,
- la figure 6b est une vue en coupe horizontale correspondant à une arête verticale d'un module selon un deuxième mode de réalisation de l'invention,
- la figure 6c est une vue en coupe horizontale correspondant à une arête verticale d'un module selon un troisième mode de réalisation de l'invention,
- la figure 7 est une vue de face d'un système de maintien au froid dans un mode de réalisation de l'invention, dans laquelle on voit certaines étagères garnies,
- la figure 8 est une vue en coupe d'une boite dans un mode de réalisation de l'invention,
- la figure 9 est une vue en blocs d'un arrangement dans un mode de réalisation de l'invention, et
- la figure 10 est un graphe expérimental illustrant des résultats de mesures réalisées avec un conteneur selon un mode de réalisation de l'invention par rapport à un conteneur ne présentant pas les caractéristiques de l'invention.

### Modes de réalisation de l'invention

La présente invention est décrite avec des réalisations particulières et des références à des figures mais l'invention n'est pas limitée par celles-ci. Les dessins ou figures décrits ne sont que schématiques et ne sont pas limitants.

Dans le contexte du présent document, les termes « premier » et « deuxième » servent uniquement à différencier les différents éléments et n'impliquent pas d'ordre entre ces éléments. En outre, il est possible que le conteneur selon l'invention comprenne, par exemple, un élément dans un « troisième » matériau sans qu'il ne comprenne d'élément dans un « deuxième » matériau

Sur les figures, les éléments identiques ou analogues peuvent porter les mêmes références.

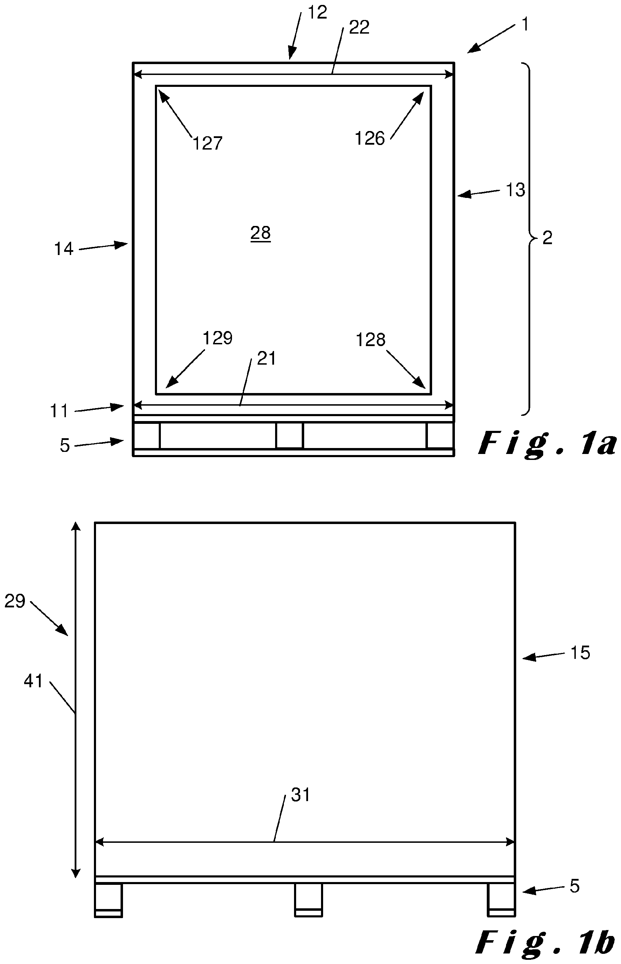

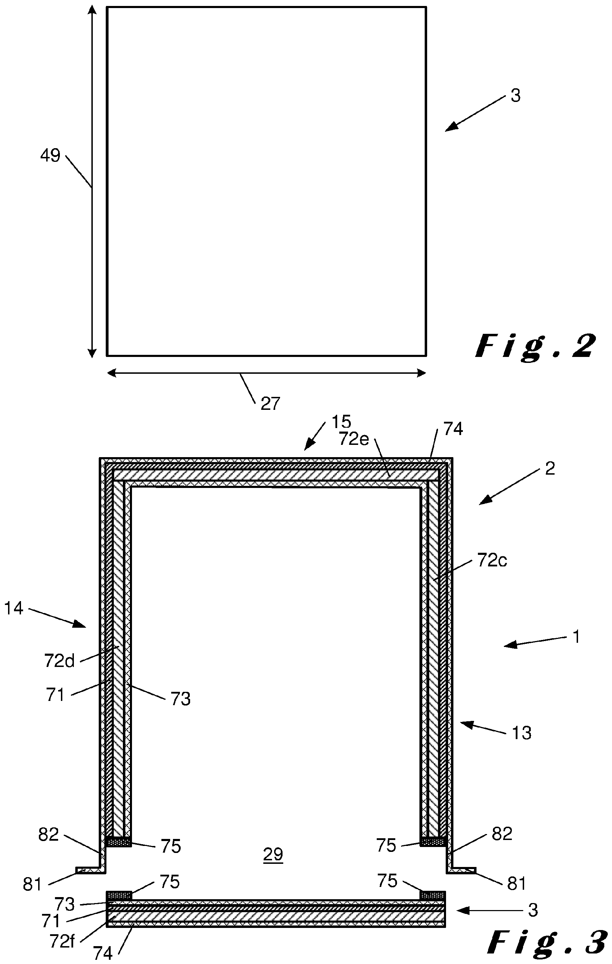

La présente invention concerne notamment un conteneur 1 pour stockage et/ou envoi thermostable de produits. Le conteneur 1 comprend un module 2 et un couvercle 3. Le module 2 est illustré aux figures 1a et 1b. Il comprend cinq parois: une première11, une deuxième12, une troisième 13, une quatrième 14, et une cinquième paroi 15 ; et une ouverture 29. Les parois 11-15 sont préférentiellement rectangulaires et disposées de façon à ce que le module 2 ait une forme de parallélépipède rectangle, dont l'ouverture 29 forme un côté. Le couvercle 3 est illustré aux figures 2 et 3.

Le conteneur 1 permet d'enclore un volume intérieur 28 de maximum 5000 litres.

La première paroi 11 est prévue pour être disposée sur une palette 5. La première 11 et la deuxième 12 parois ont préférentiellement une largeur 21 et 22 d'au moins 500 mm et une profondeur 31 d'au moins 500 mm. La troisième 13 et la quatrième 14 parois ont préférentiellement une profondeur 31 d'au moins 500 mm et une hauteur 41 d'au moins 400 mm. La cinquième paroi 15 a préférentiellement une largeur 21 d'au moins 500 mm et une hauteur 41 d'au moins 400 mm.

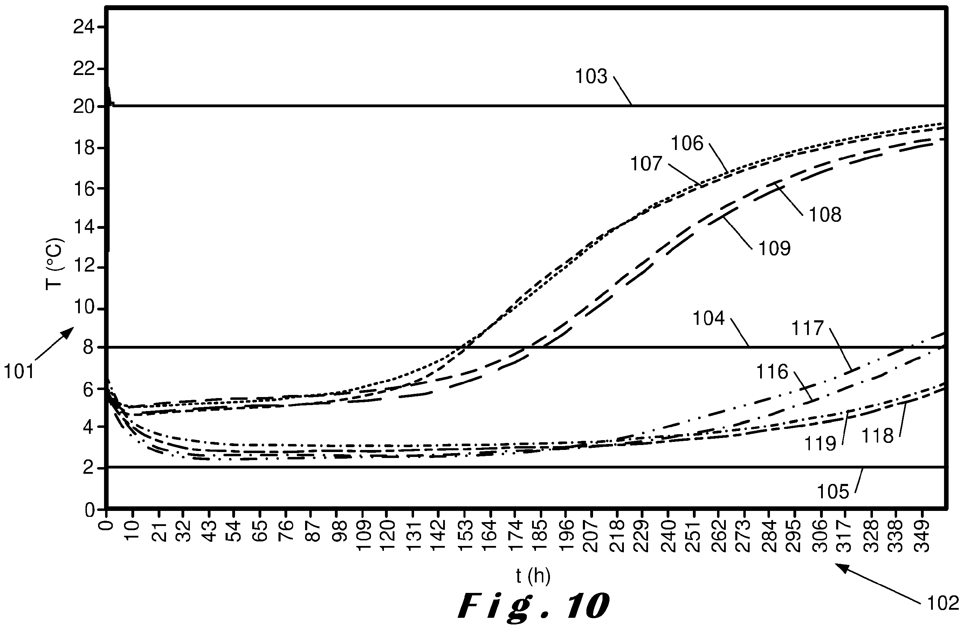

Les références 126, 127, 128 et 129 seront utilisées en référence à la figure 10.

Le couvercle 3 (illustré figure 2) a préférentiellement une largeur 27 d'au moins 500 mm et une hauteur 49 d'au moins 400 mm.

La figure 3 est une vue en coupe horizontale d'un conteneur 1 selon un mode de réalisation de l'invention, où on voit le couvercle 3 séparé du module 2. Le module 2 comprend un premier matériau 71, monobloc, et au moins cinq panneaux : un premier 72a, un deuxième 72b, un troisième 72c, un quatrième 72d, et un cinquième 72e panneaux. Les panneaux 72a-e sont préférentiellement plans. Ils comprennent potentiellement des découpes sur leurs côtés d'extrémités. Les panneaux 72a-e sont au moins partiellement recouverts du premier matériau 71. Chacune des cinq parois 11-15 comprend, au moins partiellement, un des panneaux 72a-e. Les cinq panneaux 72a-e sont maintenus en position fixe les uns par rapport aux autres par le premier matériau 71. Le couvercle 3 comprend, préférentiellement, un sixième panneau 72f au moins partiellement recouvert du premier matériau 71.

Dans un mode de réalisation de l'invention, le conteneur 1 comprend un deuxième matériau 73 recouvrant, au moins partiellement et préférentiellement totalement, sa surface intérieure lorsque le couvercle 3 ferme l'ouverture 29. Le deuxième matériau 73 recouvre la surface intérieure des première 11, deuxième 12, troisième 13, quatrième 14 et cinquième 15 parois, et préférentiellement au moins partiellement la surface intérieure du couvercle 3.

Dans un mode de réalisation de l'invention, le conteneur 1 comprend un troisième matériau 74 recouvrant, au moins partiellement et préférentiellement totalement, sa surface extérieure lorsque le couvercle 3 ferme l'ouverture 29. Le troisième matériau 74 recouvre la surface extérieure des première 11, deuxième 12, troisième 13, quatrième 14 et cinquième 15 parois, et préférentiellement au moins partiellement la surface extérieure du couvercle 3.

Dans un mode de réalisation de l'invention, le troisième matériau 74 dépasse des première 11, deuxième 12, troisième 13, et quatrième 14 parois, en une extension 82 qui permet de recevoir le couvercle 3 contre le module 2. Le troisième matériau 74 forme préférentiellement des rabats 81 qui permettent de bloquer le couvercle 3 contre le module 2 lorsqu'ils sont rabattus sur la surface extérieure du couvercle 3. Les rabats 81 peuvent par exemple être maintenus fermés par une attache comme une sangle ou un velcro.

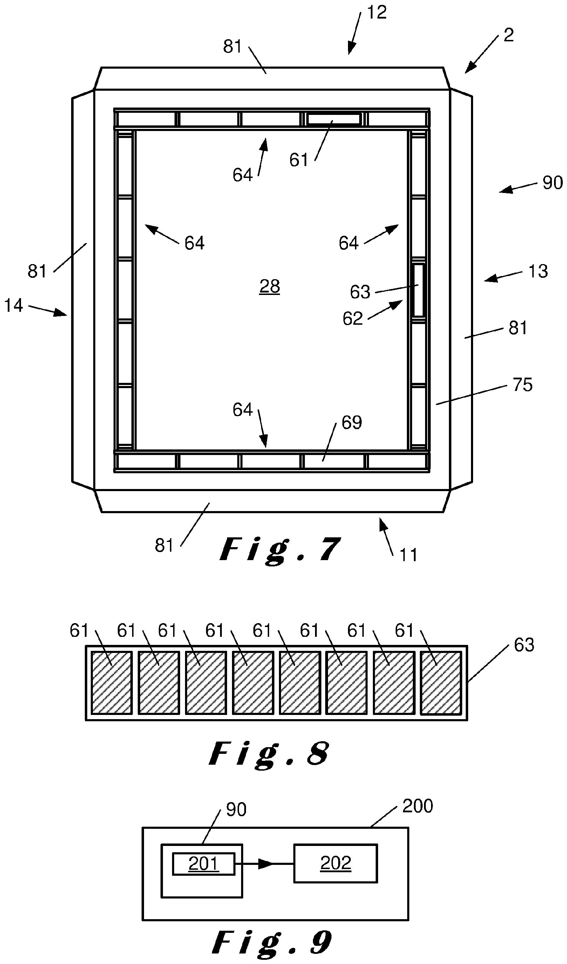

Dans un mode de réalisation de l'invention, le conteneur 1 comprend un cinquième matériau 75 disposé aux zones de contact entre le module 2 et le couvercle 3, c'est-à-dire à l'interface entre le module 2 et le couvercle 3. Par exemple, le module 2 peut comprendre un élément ayant la forme d'un pourtour de rectangle autour de l'ouverture 29 (comme illustré figure 7). Le cinquième matériau 75 a une compressibilité plus grande que le premier matériau 71.

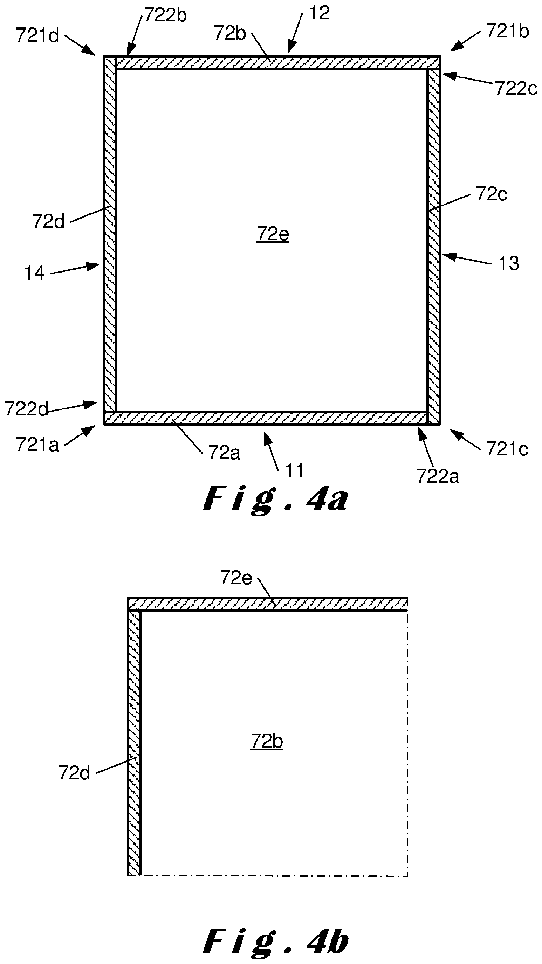

La figure 4a illustre un agencement possible des premier, deuxième, troisième, et quatrième panneaux 72a-d. Les premier à quatrième panneaux 72a-d, qui sont optionnellement des parallélépipèdes rectangles, sont disposés de façon à ce que leurs tranches forment un rectangle où un des deux plus petit côtés d'un panneau rejoint un des plus grands côtés du panneau précédent, les deux panneaux étant perpendiculaires. En d'autres termes, la première paroi 11 comprend une première extrémité 721c du troisième panneau 72c, la quatrième paroi 14 comprend une première extrémité 721a du premier panneau 72a, la deuxième paroi 12 comprend une première extrémité 721d du quatrième panneau 72d, et la troisième paroi 13 comprend une première extrémité 721b du deuxième panneau 72b.

Chaque panneau 72a-72d comprend une deuxième extrémité 722ad opposée à la première extrémité 721a-d (par extrémité, on entend, bien entendu, côté d'extrémité). De façon général, l'invention propose des modes de réalisation où :
- la première extrémité 721a du premier panneau 72a est en contact avec la deuxième extrémité 722d du quatrième panneau 72d de façon à ce qu'il existe un chevauchement ;
- la première extrémité 721d du quatrième panneau 72d est en contact avec la deuxième extrémité 722b du deuxième panneau 72b de façon à ce qu'il existe un chevauchement ;
- la première extrémité 721b du deuxième panneau 72b est en contact avec la deuxième extrémité 722c du troisième panneau 72c de façon à ce qu'il existe un chevauchement ; et
- la première extrémité 721c du troisième panneau 72c est en contact avec la deuxième extrémité 722a du premier panneau 72a de façon à ce qu'il existe un chevauchement.

Le cinquième panneau 72e ferme un côté du module 2 en étant disposé de façon à recouvrir les tranches des premier à quatrième panneaux 72a-d comme illustré à la figure 4b. A cet effet, le cinquième panneau 72e peut avoir une largeur égale à la somme de la largeur du deuxième panneau 72b et de l'épaisseur du quatrième panneau 72d.

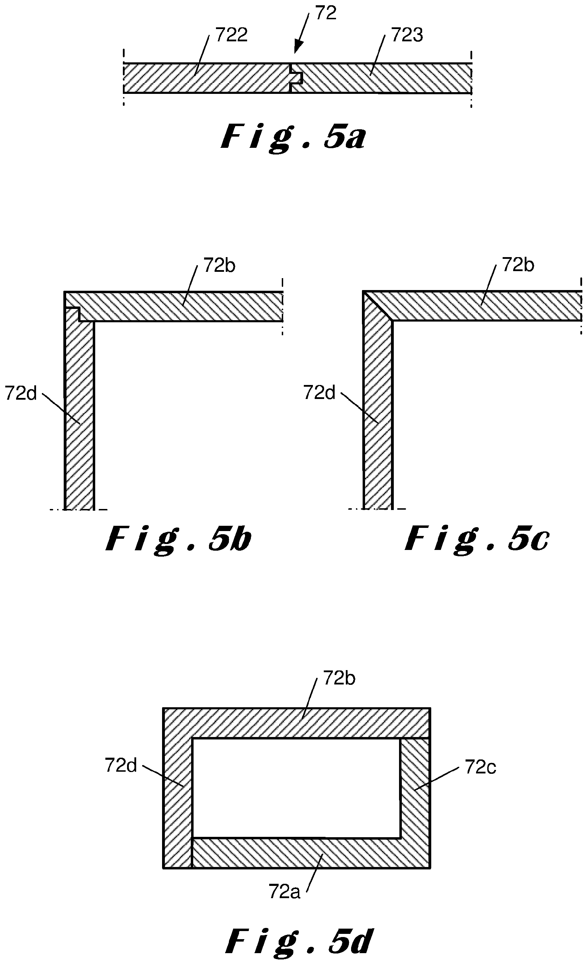

La figure 5a illustre un agencement possible de deux parties 722, 723 d'un panneau qui peut être n'importe lequel des premier 72a à sixième 72f panneaux. La première partie 722 du panneau 72 comprend un tenon et la deuxième partie 723 comprend une mortaise.

La figure 5b illustre un agencement possible de deux panneaux, par exemples les deuxième 72b et quatrième 72d panneaux. L'épaisseur de chacun des panneaux comprend une découpe permettant un emboitement.

La figure 5c illustre un agencement possible de deux panneaux, par exemples les deuxième 72b et quatrième 72d panneaux. L'épaisseur de chacun des panneaux est coupée en biais pour permettre un emboitement.

La figure 5d illustre un agencement possible des premier 72a à quatrième 72d panneaux. Dans ce mode de réalisation, les panneaux sont fixés deux par deux, ou sont d'une seule pièce, préalablement à l'assemblage par le premier matériau 71.

Les figures 5b, 5c, 5d illustrent des modes de réalisations dans lesquels chacune des premières extrémités 721a-d des premier à quatrième panneaux 72a-d est en contact avec la deuxième extrémité 722a-d d'un panneau adjacent de façon qu'un chevauchement existe entre la première extrémité 721a-d de chacun des premier à quatrième panneaux 72a-d et la deuxième extrémité 722a-d d'un panneau adjacent.

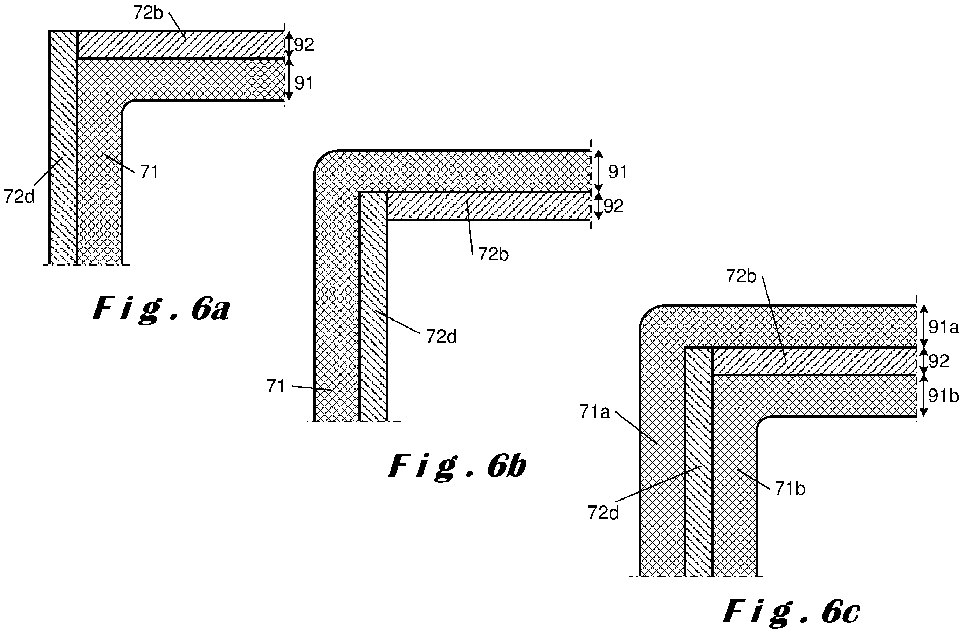

La figure 6a illustre un premier agencement possible des premier, deuxième, troisième, quatrième, et cinquième panneaux 72a-e par rapport au premier matériau 71, dans lequel le premier matériau 71 recouvre les surfaces intérieures des cinq panneaux 72a-e.

La figure 6b illustre un deuxième agencement possible des premier, deuxième, troisième, quatrième, et cinquième panneaux 72a-e par rapport au premier matériau 71, dans lequel le premier matériau 71 recouvre les surfaces extérieures des cinq panneaux 72a-e.

La figure 6c illustre un troisième agencement possible des premier, deuxième, troisième, quatrième, et cinquième panneaux 72a-e par rapport au premier matériau 71, dans lequel le premier matériau 71 recouvre les surfaces intérieures et les surfaces extérieures des cinq panneaux 72a-e, de façon à obtenir une couche extérieure 71a et une couche intérieure 71b. La couche extérieure 71a est préférentiellement, mais pas nécessairement, monobloc avec la couche intérieure 71b.

Le premier matériau 71 a préférentiellement une épaisseur 91 entre 10 et 80 mm, plus préférentiellement entre 30 et 60 mm, par exemple 40 mm. Dans le troisième agencement, l'épaisseur 91a ou 91b de chacune des couches, ou à la somme 91a+91b des épaisseurs de chacune des couches, peut être entre 10 et 80 mm, plus préférentiellement entre 30 et 60 mm, par exemple 40 mm.

Les panneaux 72a-e ont préférentiellement une épaisseur 92 entre 5 et 50 mm, plus préférentiellement entre 15 et 25 mm, par exemple 20 mm.

La figure 7 illustre un système de maintien de température 90, ayant pour but de garder le contenu du conteneur dans un intervalle de température endéans un délai déterminé, et comprenant un conteneur 1 selon un quelconque des modes de réalisation de l'invention, et des éléments de contrôle de température 61 comprenant un matériau à changement de phase.

La figure 7 illustre aussi un système de rangement 62 permettant de maintenir en place les éléments de contrôle de température 61. Le système de rangement 62 peut maintenir en place les éléments de contrôle de température 61 eux-mêmes et/ou des boites 63 contenant les éléments de contrôle de température 61. Par exemple, le système de rangement 62 peut comprendre entre une et six étagères 64 pour recevoir et bloquer les éléments de contrôle de température 61 eux-mêmes et/ou les boites 63. La position des étagères 64 est préférentiellement modulable.

Dans un mode de réalisation de l'invention, les étagères 64 sont situées, au moins partiellement, le long des surfaces intérieures des première 11, deuxième 12, troisième 13, et/ou quatrième 14 parois, et ont un accès 69 débouchant sur l'ouverture 29 du module 2. De telles étagères 64 s'étendent préférentiellement sur toute la profondeur des première 11, deuxième 12, troisième 13, et quatrième 14 parois.

Par exemple, il est possible de placer une pluralité d'éléments de contrôle de température 61 dans des boites 63 (comme illustré par l'exemple de la figure 8), puis de glisser les boites 63 dans les étagères 64, comme montré sur la droite de la figure 7. Une boite 63 peut par exemple comprendre des éléments de contrôle de température 61 alignés en une seule ligne ou répartis en deux lignes ou plus. Une boite 63 peut comprendre des lignes superposées d'éléments de contrôle de température 61. Il est aussi possible de mettre les éléments de contrôle de température 61 dans les étagères 64 comme montré en haut de la figure 7.

La figure 9 illustre un mode de réalisation de l'invention qui concerne un arrangement 200 comprenant un système 90 de maintien de température selon l'invention, un thermomètre 201 situé dans le conteneur 1 du système 90 de maintien de température, et une mémoire 202 enregistrant des données issues de mesures de températures réalisées par le thermomètre 201. La mémoire 202 peut être par exemple dans un dispositif électronique extérieur au conteneur 1 et recevant des informations du thermomètre 201. Cela permet un suivi en temps réel de la température. La mémoire 202 peut être dans le conteneur 1 et collecter données issues de mesures de températures réalisées par le thermomètre 201, afin de vérifier, après ouverture du conteneur 1, si la température intérieure est bien restée dans l'intervalle souhaité.

La figure 10 montre des résultats expérimentaux de température 101 en fonction du temps 102 exprimé en heures. La courbe 103 est la température de la pièce dans laquelle l'expérience a lieu. La droite 104 est à 8°C, qui est un seuil habituel dans le domaine, et la droite 105 est à 2°C.

Les courbes 106, 107, 108, 109 correspondent respectivement à deux coins supérieurs 126 arrière et 127 avant et deux coins inférieurs 128 arrière et 129 avant (figure 1a) d'un conteneur qui ne comprend pas de panneaux (appelé conteneur A). Les courbes 116, 117, 118,119 correspondent respectivement à deux coins supérieurs 126 arrière et 127 avant et deux coins inférieurs 128 arrière et 129 avant (figure 1a) d'un conteneur selon l'invention (appelé conteneur B).

Ces données expérimentales montrent l'effet du conteneur 1 selon l'invention : avec un tel conteneur, il est possible de maintenir une température en-dessous de 8°C pendant 2 semaines (= 336 heures).

Les dimensions des conteneurs ayant servis pour ces mesures sont données dans le tableau ci-dessous. Le premier matériau 71 est du polyuréthane. Les panneaux 72a-f du conteneur B sont des panneaux d'isolation à vide.

| | conteneur A (référence) | conteneur B (invention) |
|---|---|---|
| Dimensions externes : largeur 21 x profondeur 31 x hauteur 41 (mm) | 1.190 x 985 x 1.415 | 1.190 x 985 x 1.415 |
| Dimensions internes: largeur x profondeur x hauteur (mm) | 1.065 x 860 x 1.297 | 1.065 x 860 x 1.297 |
| Epaisseur 91 du premier matériau 71 (mm) | 57 | 37 |
| Epaisseur 92 des panneaux 72a-f (mm) | / | 20 |
| Epaisseur du deuxième matériau 73 (mm) | 1 | 1 |
| Epaisseur du troisième matériau 74 (mm) | 3 | 3 |

De façon générale, la surface externe du conteneur 1 peut être modifiée pour inclure des moyens de manutention. Des exemples, nonexhaustifs, de tels moyens de manutention sont des lanières, et poignées,.

De façon générale, le conteneur 1 peut comprendre du papier bulle à un ou plusieurs endroits par exemple pour diminuer les chocs thermiques ou permettre une meilleure isolation thermique du conteneur. Du papier bulle peut entourer le produit, entourer les étagères, entourer le conteneur,...

En d'autres termes, l'invention se rapporte à un conteneur 1 pour stockage et/ou envoi thermostable de produits comprenant des panneaux 72a-e de conductivité thermique inférieure à 0,005 W m⁻¹ K⁻¹ assemblés par un premier matériau 71 de façon à former un monobloc.

La présente invention a été décrite en relation avec des modes de réalisations spécifiques, qui ont une valeur purement illustrative et ne doivent pas être considérés comme limitatifs. D'une manière générale, la présente invention n'est pas limitée aux exemples illustrés et/ou décrits ci-dessus. L'usage des verbes « comprendre », « inclure », « comporter », ou toute autre variante, ainsi que leurs conjugaisons, ne peut en aucune façon exclure la présence d'éléments autres que ceux mentionnés. L'usage de l'article indéfini « un », « une », ou de l'article défini « le », « la » ou « l' », pour introduire un élément n'exclut pas la présence d'une pluralité de ces éléments. Les numéros de référence dans les revendications ne limitent pas leur portée.

## Revendications

1. Conteneur (1) pour stockage et/ou envoi thermostable de produits, destiné à contenir un volume intérieur (28) de maximum 5000 litres, et comprenant un module (2) comprenant :
• une première paroi (11),
• une deuxième paroi (12) opposée à la première paroi (11),
• une troisième paroi (13) joignant la première (11) et la deuxième (12) parois,
• une quatrième paroi (14) joignant la première (11) et la deuxième (12) parois,
• une cinquième paroi (15) joignant la première (11) et la deuxième (12) parois, et la troisième (13) et la quatrième (14) parois, et
• une ouverture (29) ;
le conteneur (1) comprenant en outre un couvercle (3) destiné à fermer l'ouverture (29) ;
dans lequel :
le module (2) comprend un premier matériau (71) et une pluralité de panneaux comprenant au moins un premier (72a), un deuxième (72b), un troisième (72c), un quatrième (72d), et un cinquième (72e) panneaux;
les premier, deuxième, troisième, quatrième, et cinquième panneaux (72a-e) sont recouverts au moins partiellement du premier matériau (71) ;
la première paroi (11) comprend au moins une partie du premier panneau (72a), la deuxième paroi (12) comprend au moins une partie du deuxième panneau (72b), la troisième paroi (13) comprend au moins une partie du troisième panneau (72c), la quatrième paroi (14) comprend au moins une partie du quatrième panneau (72d), et la cinquième paroi (15) comprend au moins une partie du cinquième panneau (72e) ;
les premier, deuxième, troisième, quatrième, et cinquième panneaux (72a-e) ont une conductivité thermique inférieure à 0,005 W m⁻¹ K⁻¹ ;
**caractérisé en ce que** :
les premier, deuxième, troisième, quatrième, et cinquième panneaux (72a-e) sont fixés entre eux par le premier matériau (71) de sorte que le premier matériau (71) et les premier, deuxième, troisième, quatrième, et cinquième panneaux (72a-e) font partie d'un même élément monobloc ;
le premier matériau (71) est du polyuréthane ; et
le premier matériau (71) a une conductivité thermique inférieure à 0,05 W m⁻¹ K⁻¹.

2. Conteneur selon la revendication 1, dans lequel le premier matériau (71) a une masse volumique entre 30 et 100 kg/m³.

3. Conteneur selon l'une quelconque des revendications précédentes, dans lequel les premier, deuxième, troisième, quatrième, et cinquième panneaux (72a-e) sont plans.

4. Conteneur selon l'une quelconque des revendications précédentes, dans lequel chacun des premier à quatrième panneaux (72a-d) a une première extrémité (721a-d) et une deuxième extrémité (722a-d), chacune des premières extrémités (721a-d) étant en contact avec la deuxième extrémité (722a-d) d'un autre des premier à quatrième panneaux (72a-d) de façon qu'un chevauchement existe entre la première extrémité (721a-d) de chacun des premier à quatrième panneaux (72a-d) et la deuxième extrémité (722ad) d'un autres des premier à quatrième panneaux (72a-d).

5. Conteneur selon l'une quelconque des revendications précédentes, dans lequel les première (11), deuxième (12), troisième (13), quatrième (14) et cinquième (15) parois, et préférentiellement le couvercle (3), ont une surface intérieure recouverte, au moins partiellement, d'un deuxième matériau (73).

6. Conteneur selon l'une quelconque des revendications précédentes, dans lequel les première (11), deuxième (12), troisième (13), quatrième (14) et cinquième (15) parois, et préférentiellement le couvercle (3), ont une surface extérieure recouverte, au moins partiellement, d'un troisième matériau (74).

7. Conteneur selon l'une quelconque des revendications précédentes, dans lequel les première (11), deuxième (12), troisième (13), quatrième (14) et cinquième (15) parois, et préférentiellement le couvercle (3), ont une surface extérieure et/ou intérieure protégée au moins partiellement et préférentiellement totalement par un renfort fait d'un quatrième matériau.

8. Conteneur selon l'une quelconque des revendications précédentes, comprenant un cinquième matériau (75), au moins aussi compressible que le matériau formant la surface intérieure du couvercle (3), à l'interface entre le module (2) et le couvercle (3).

9. Système (90) de maintien de température comprenant un conteneur (1) selon l'une quelconque des revendications précédentes, et des éléments de contrôle de température (61) comprenant un matériau à changement de phase.

10. Système selon la revendication précédente comprenant un système de rangement (62) permettant de maintenir en places les éléments de contrôle de température (61).

11. Système selon la revendication précédente, dans lequel le système de rangement (62) comprend entre une et six étagères (64) prévues pour recevoir les éléments de contrôle de température (61).

12. Système selon la revendication 10 ou 11, dans lequel le système de rangement (62) comprend des boites (63) dans lesquelles les éléments de contrôle de température (61) sont alignés ou superposés.

13. Système selon la revendication 11, dans lequel le système de rangement (62) comprend des boites (63) dans lesquelles les éléments de contrôle de température (61) sont alignés ou superposés, les étagères (64) étant prévues pour recevoir les boites (63).

14. Système selon la revendication 11 ou 13, dans lequel les étagères (64) sont situées, au moins partiellement, le long des surfaces intérieures des première (11), deuxième (12), troisième (13), et/ou quatrième (14) parois, et ont un accès (69) débouchant sur l'ouverture (29) du module (2).

15. Arrangement (200) comprenant un conteneur (1) selon l'une quelconque des revendications 1 à 8 ou un système (90) de maintien de température selon l'une quelconque des revendications 9 à 14, un thermomètre (201) situé dans le conteneur (1) et une mémoire (202) prévue pour enregistrer des données issues de mesures de températures réalisées par le thermomètre (201).

## Patentansprüche

1. Behälter (1) für die thermostabile Lagerung und/oder Versendung von Produkten, der dazu vorgesehen ist, ein Innenvolumen (28) von höchstens 5000 Litern zu enthalten, und ein Modul (2) umfassend, Folgendes umfassend:
• eine erste Wand (11),
• eine zweite Wand (12) gegenüber der ersten Wand (11),
• eine dritte Wand (13), die die erste (11) und die zweite (12) Wand verbindet,
• eine vierte Wand (14), die die erste (11) und die zweite (12) Wand verbindet,
• eine fünfte Wand (15), die die erste (11) und die zweite (12) Wand, und die dritte (13) und die vierte Wand (14) verbindet, und
• eine Öffnung (29);
wobei der Behälter (1) weiter einen Deckel (3) umfasst, der dazu vorgesehen ist, die Öffnung (29) zu verschließen;
wobei:
das Modul (2) ein erstes Material (71) und eine Vielzahl von Platten umfasst, umfassend mindestens eine erste (72a), eine zweite (72b), eine dritte (72c), eine vierte (72d) und eine fünfte (72e) Platte;
die erste, zweite, dritte, vierte und fünfte Platte (72a-e) mindestens teilweise durch das erste Material (71) bedeckt werden;
die erste Wand (11) mindestens einen Teil der ersten Platte (72a) umfasst, die zweite Wand (12) mindestens einen Teil der zweiten Platte (72b) umfasst, die dritte Wand (13) mindestens einen Teil der dritten Platte (72c) umfasst, die vierte Wand (14) mindestens einen Teil der vierten Platte (72d) umfasst und die fünfte Wand (15) mindestens einen Teil der fünften Platte (72e) umfasst;
die erste, zweite, dritte, vierte und fünfte Platte (72a-e) eine Wärmeleitfähigkeit unter 0,005 W m⁻¹ K⁻¹ aufweisen;
**dadurch gekennzeichnet, dass**:
die erste, zweite, dritte, vierte und fünfte Platte (72a-e) durch das erste Material (71) derart untereinander befestigt sind, dass das erste Material (71) und die erste, zweite, dritte, vierte und fünfte Platte (72a-e) Teil eines selben einstückigen Elements bilden;
das erste Material (71) Polyurethan ist; und
das erste Material (71) eine Wärmeleitfähigkeit unter 0,05 W m⁻¹ K⁻¹ aufweist.

2. Behälter nach Anspruch 1, wobei das erste Material (71) ein Massenvolumen zwischen 30 und 100 kg/m³ aufweist.

3. Behälter nach einem der vorstehenden Ansprüche, wobei die erste, zweite, dritte, vierte und fünfte Platte (72a-e) eben sind.

4. Behälter nach einem der vorstehenden Ansprüche, wobei jede der ersten bis vierten Platte (72a-d) ein erstes Ende (721a-d) und zweites Ende (722a-d) aufweist, wobei jedes der ersten Enden (721a-d) mit dem zweiten Ende (722a-d) einer anderen der ersten bis vierten Platte (72a-d) in Kontakt steht, sodass eine Überlappung zwischen dem ersten Ende (721a-d) jeder der ersten bis vierten Platte (72a-d) und dem zweiten Ende (722a-d) einer anderen der ersten bis vierten Platte (72a-d) besteht.

5. Behälter nach einem der vorstehenden Ansprüche, wobei die erste (11), zweite (12), dritte (13), vierte (14) und fünfte (15) Wand und vorzugsweise der Deckel (3) eine Innenfläche aufweisen, die mindestens teilweise durch ein zweites Material (73) bedeckt wird.

6. Behälter nach einem der vorstehenden Ansprüche, wobei die erste (11), zweite (12), dritte (13), vierte (14) und fünfte (15) Wand und vorzugsweise der Deckel (3) eine Außenfläche aufweisen, die mindestens teilweise durch ein drittes Material (74) bedeckt wird.

7. Behälter nach einem der vorstehenden Ansprüche, wobei die erste (11), zweite (12), dritte (13), vierte (14) und fünfte (15) Wand und vorzugsweise der Deckel (3) eine Außen- und/oder Innenfläche aufweisen, die mindestens teilweise und vorzugsweise vollständig durch eine aus einem vierten Material hergestellte Rippe geschützt wird.

8. Behälter nach einem der vorstehenden Ansprüche, umfassend ein fünftes Material (75), das mindestens genauso verdichtbar ist wie das Material, das die Innenfläche des Deckels (3) bildet, an der Grenzfläche zwischen dem Modul (2) und dem Deckel (3).

9. System (90) zur Temperaturaufrechterhaltung, umfassend einen Behälter (1) nach einem der vorstehenden Ansprüche und Temperatursteuerelemente (61), die ein Phasenänderungsmaterial umfassen.

10. System nach dem vorstehenden Anspruch, umfassend ein Ordnungssystem (62), das erlaubt, die Temperatursteuerelemente (61) festsitzend zu halten.

11. System nach dem vorstehenden Anspruch, wobei das Ordnungssystem (62) zwischen einem und sechs Regalen (64) umfasst, die dazu vorgesehen sind, die Temperatursteuerelemente (61) aufzunehmen.

12. System nach Anspruch 10 oder 11, wobei das Ordnungssystem (62) Kasten (63) umfasst, in denen die Temperatursteuerelemente (61) aufgereiht oder übereinandergelegt sind.

13. System nach Anspruch 11, wobei das Ordnungssystem (62) Kasten (63) umfasst, in denen die Temperatursteuerelemente (61) aufgereiht oder übereinandergelegt sind, wobei die Regale (64) dazu vorgesehen sind, die Kasten (63) aufzunehmen.

14. System nach Anspruch 11 oder 13, wobei die Regale (64) mindestens teilweise entlang der Innenfläche der ersten (11), zweiten (12), dritten (13) und /oder vierten (14) Wand gelegen sind und einen Zugang (69) aufweisen, der in der Öffnung (29) des Moduls (2) mündet.

15. Anordnung (200), umfassend einen Behälter (1) nach einem der Ansprüche 1 bis 8 und ein System (90) zur Temperaturaufrechterhaltung nach einem der Ansprüche 9 bis 14, ein Thermometer (201), das im Behälter (1) gelegen ist, und einen Speicher (202), der dazu vorgesehen ist, Daten aus Temperaturmessungen, die von dem Thermometer (201) durchgeführt werden, zu speichern.

## Claims

1. A container (1) for thermostable storage and/or shipment of products, intended to contain an internal volume (28) of at most 5000 litres, and comprising a module (2) comprising:
• a first wall (11),
• a second wall (12) opposite the first wall (11),
• a third wall (13) joining the first (11) and second (12) walls,
• a fourth wall (14) joining the first (11) and second (12) walls,
• a fifth wall (15) joining the first (11) and second (12) walls, and the third (13) and fourth (14) walls, and
• an opening (29);
the container (1) further comprising a lid (3) for closing the opening (29);
wherein:
the module (2) comprises a first material (71) and a plurality of panels comprising at least a first (72a), a second (72b), a third (72c), a fourth (72d), and a fifth (72e) panels;
the first, second, third, fourth, and fifth panels (72a-e) are at least partially covered with the first material (71);
the first wall (11) comprises at least a part of the first panel (72a), the second wall (12) comprises at least a part of the second panel (72b), the third wall (13) comprises at least a part of the third panel (72c), the fourth wall (14) comprises at least a part of the fourth panel (72d), and the fifth wall (15) comprises at least a part of the fifth panel (72e);
the first, second, third, fourth and fifth (72e) panels have a thermal
conductivity of less than 0.005 W m-1 K-1;
**characterized in that** :
the first, second, third, fourth, and fifth panels (72a-e) are secured together by the first material (71) such that the first material (71) and the first, second, third, fourth, and fifth panels (72a-e) form part of a monobloc element;
the first material (71) is polyurethane; and
the first material (71) has a thermal conductivity of less than 0.05 W m⁻¹ K⁻¹.

2. The container according to claim 1, wherein the first material (71) has a density between 30 and 100 kg/m³.

3. The container according any of the previous claims, wherein the first, second, third, fourth, and fifth panels (72a-e) are planar.

4. The container according to any of the previous claims, wherein each of the first to fourth panels (72a-d) has a first end (721a-d) and a second end (722a-d), each of the first ends (721a-d) being in contact with the second end (722a-d) of another of the first to fourth panels (72a-d) such that an overlap exists between the first end (721a-d) of each of the first to fourth panels (72a-d) and the second end (722a-d) of another of the first to fourth panels (72a-d).

5. The container according to any of the previous claims, wherein the first (11), second (12), third (13), fourth (14) and fifth (15) walls, and preferably the lid (3), have an inner surface covered, at least partially, by a second material (73).

6. The container according to any of the previous claims, wherein the first (11), second (12), third (13), fourth (14) and fifth (15) walls, and preferably the lid (3), have an outer surface covered, at least partially, with a third material (74).

7. The container according to any of the previous claims, wherein the first (11), second (12), third (13), fourth (14) and fifth (15) walls, and preferably the lid (3), have an outer and/or inner surface protected at least partially and preferably completely by a reinforcement made of a fourth material.

8. The container according to any of the previous claims, comprising a fifth material (75), at least as compressible as the material forming the inner surface of the lid (3), at the interface between the module (2) and the lid (3).

9. A temperature maintenance system comprising a container (1) according to any of the previous claims, and temperature control elements (61) comprising a phase change material.

10. The system according to previous claim comprising a storage system (62) for holding the temperature control elements (61) in place.

11. The system according to previous claim, wherein the storage system (62) comprises between one and six shelves (64) provided to receive the temperature control elements (61).

12. The system according to claim 10 or 11, wherein the storage system (62) comprises boxes (63) in which the temperature control elements (61) are aligned or stacked.

13. The system according to claim 11, wherein the storage system (62) comprises boxes (63) in which the temperature control elements (61) are aligned or stacked, the shelves (64) being provided to receive the boxes (63).

14. The system according to claim 11 or 13, wherein the shelves (64) are located, at least partially, along the inner surfaces of the first (11), second (12), third (13), and/or fourth (14) walls, and have an access (69) leading to the opening (29) of the module (2).

15. An arrangement (200) comprising a container (1) according to any of claims 1 to 8 or a temperature maintenance system according to any of claims 9 to 14, a thermometer (201) located in the container (1) and a memory (202) provided for storing data from temperature measurements made by the thermometer (201).
